# FASCICULE DE BREVET EUROPEEN

(11) **EP 0 731 307 B1**
(45) Date de publication et mention de la délivrance du brevet: **09.02.2000**
(21) Numéro de dépôt: 96400422.0
(22) Date de dépôt: 28.02.1996
(51) Int. Cl.: F16L 11/04, F16L 9/12

(54) **Tube pour transport d'eau potable**
Transportrohr für Trinkwasser
Pipe for conveying drinking water

(30) Priorité: 10.03.1995 FR 9502813
(43) Date de publication de la demande: 11.09.1996
(73) Titulaire: ELF ATOCHEM S.A., 92800 Puteaux, Hauts-de-Seine (FR)
(72) Inventeur: Siour, Daniel, F-78500 Sartrouville (FR); Denizart, Olivier, F-69390 Millery (FR)

(56) Documents cités:
- WO-A-93/21466
- FR-A- 2 701 303
- US-A- 3 561 493

## Description

La présente invention concerne des tubes pour le transport de l'eau potable et plus particulièrement les tubes en polyoléfines. Les réseaux de distribution d'eau potable, en particulier, les réseaux enterrés sont en tubes de polyoléfines telles que du polyéthylène ou du polypropylène. Ces tubes ont beaucoup d'avantages. Ils ne se corrodent pas, ils sont livrés en couronnes de grande largeur, il suffit de les dérouler.

Le polyéthylène ou le polypropylène n'ont pas besoin de plastifiants et ils conviennent très bien pour l'eau potable. Cependant, certains terrains peuvent être pollués ou présentent le risque d'être pollués par des hydrocarbures essentiellement non polaires comme le toluène, le benzène, le fuel ou l'essence pour automobiles.

Les polyoléfines étant des matériaux non polaires sont perméables à ces polluants qui migrent à travers la paroi du tube et polluent l'eau.

La demanderesse a maintenant trouvé des tubes pour le transport d'eau potable, qui sont étanches aux hydrocarbures tout en conservant les avantages des tubes en polyoléfines. Des tubes pour des fluides dans les véhicules automobiles tels que le carburant ou le liquide lave-glace sont connus du FR-A-2 701 303.

La présente invention concerne l'utilisation des tubes comprenant une couche principale en polyoléfine recouverte à l'extérieur d'une couche d'un polymère thermoplastique étanche aux hydrocarbures pour le transport d'eau potable.

La polyoléfine de la couche principale peut être choisie parmi le polyéthylène, le polypropylène, les copolymères de l'éthylène et d'une alphaoléfine, les copolymères de l'éthylène et des esters d'acides carboxyliques insaturés tels que les (méth)acrylates d'alkyle, les copolymères de l'éthylène et des dérivés vinyliques d'acides carboxyliques saturés tels que l'acétate de vinyle ou des mélanges de ces polymères.

On utilise avantageusement le polyéthylène basse densité, haute densité ou moyenne densité. Le polyéthylène est habituellement chargé de noir de carbone.

On ne sortirait pas du cadre de l'invention si la couche de polyoléfine était constituée de plusieurs couches par exemple une couche de polyoléfine recyclée entre deux couches de polyoléfine vierge.

L'épaisseur de cette couche de polyoléfine est fonction des contraintes mécaniques. A titre d'exemple, une épaisseur de 30 à 60 mm convient pour les diamètres extérieurs jusqu'à 800 mm alors que des épaisseurs de 2 à 6 mm sont utilisées pour des diamètres extérieurs de 20 mm (voir par exemple la norme NFT 54-063 pour les tubes en PEHD).

Le polymère thermoplastique étanche aux hydrocarbures peut être défini comme un polymère qui à conditions égales et pour des mesures effectuées sur des films d'épaisseur 100 µm est 15 à 100 fois moins perméable que le polyéthylène. A titre d'exemples, on peut citer :
- le polyfluorure de vinylidène (PVDF) homopolymère ou les copolymères du fluorure de vinylidène (VF₂) ayant suffisamment de motifs VF₂ pour que la couche soit étanche,
- les copolymères de l'éthylène et de l'alcool vinylique (EVOH),
- les polyesters tels que le polybutylène téréphtalate (PBT) et le polyéthylène téréphtalate (PET),
- les polyamides, les copolyamides, leurs mélanges avec des polyoléfines.
- un mélange d'un ou plusieurs des précédents avec d'autres polymères pourvu que la couche soit thermoplastique et étanche.

On peut fabriquer très simplement les tubes de l'invention par coextrusion de la polyoléfine et du polymère thermoplastique étanche. Il est recommandé de disposer un liant entre la polyoléfine de la couche principale et la couche de polymère étanche.

En effet, les polymères thermoplastiques étanches sont peu compatibles avec les polyoléfines et même au cours de la coextrusion où les deux polymères sont mis en contact près de leur point de fusion, il y a une mauvaise adhésion. Cette mauvaise adhésion peut être gênante quand on coupe le tube pour faire des branchements, des raccords ou des dérivations.

Les tubes de l'invention peuvent donc se présenter sous la forme suivante en partant de l'intérieur : polyoléfine / liant / polymère thermoplastique étanche.

On ne sortirait pas du cadre de l'invention en recouvrant la couche de polymère thermoplastique étanche par une autre couche telle qu'une polyoléfine, un caoutchouc ou un autre polymère étanche à l'eau. En effet, l'EVOH ou les polymères contenant de l'EVOH peuvent être sensibles à l'eau et perdre partiellement leurs propriétés d'étanchéité en présence d'eau.

L'épaisseur de la couche de polymère thermoplastique étanche peut être comprise entre 50 et 1 000 µm, celle de la couche éventuelle de liant entre 5 et 300 µm.

A titre d'exemples de liants, on peut citer :
- le polyéthylène, le polypropylène, les copolymères de l'éthylène et d'au moins une alphaoléfine, des mélanges de ces polymères. Tous ces polymères sont greffés par des anhydrides d'acides carboxyliques insaturés tels que l'anhydride maléique ou des époxydes insaturés tels que le méthacrylate de glycidyle. On peut aussi utiliser des mélanges de ces polymères greffés et des polymères non greffés.
- les copolymères de l'éthylène avec au moins un produit choisi parmi (i) les acides carboxyliques insaturés, leurs sels, leurs esters, (ii) les esters vinyliques d'acides carboxyliques saturés, (iii) les acides dicarboxyliques insaturés, leurs sels, leurs esters, leurs hemiesters, leurs anhydrides, (iv) les époxydes insaturés ; les monomères (i) à (iv) étant greffés ou copolymérisés.

Des liants particulièrement avantageux sont :
- le polyéthylène, le polypropylène ou les copolymères de l'éthylène et d'au moins une alpha oléfine greffés par de l'anhydride maléique et éventuellement mélangés avec d'autres copolymères de l'éthylène ou du propylène ;
- les copolymères de l'éthylène et d'un (méth)acrylate d'alkyle ou de l'acétate de vinyle greffés ou copolymérisés avec de l'anhydride maléique ou du (méth)acrylate de glycidyle, éventuellement mélangés avec du polyéthylène ou des copolymères de l'éthylène ;
- les copolymères de l'éthylène et de l'acide (méth)acrylique partiellement neutralisé par des métaux.

S'agissant du PVDF à titre de polymère thermoplastique étanche et si l'on désire une très forte adhésion, c'est-à-dire que la séparation du PVDF d'avec la polyoléfine ne peut se faire par pelage mais seulement par rupture du PVDF, il est recommandé d'utiliser un liant à base d'un mélange de polyméthacrylate d'alkyle, d'élastomère et de PVDF. Ce liant est décrit dans les brevets US 4 317 860 et US 5 242 976.

Ce sont des mélanges de polyester aliphatique, de préférence, la polycaprolactone et d'une polyoléfine halogénée de préférence chlorée.

On peut aussi greffer sur le polyester aliphatique au moins un produit choisi parmi:
- les acides carboxyliques insaturés, leurs sels, leurs esters, leurs anhydrides ; par exemple l'anhydride maléique ;
- les produits insaturés portant des fonctions epoxydées par exemple le (méth)acrylate de glycidyle ;
- les esters vinyliques par exemple l'acétate de vinyle ;
- le styrène et ses dérivés.

La quantité de monomère greffé est en général inférieure à 15 % en poids du polyester aliphatique non greffé.

Parmi les polyoléfines halogénées, on peut citer les polyéthylène (PE) et polypropylène (PP) chlorés et notamment celles dont le taux de chlore est compris entre 10 et 50 % en poids.

Selon une forme particulière de l'invention, la couche principale de polyoléfine et/ou la couche de polymère thermoplastique étanche contiennent un produit qui permet leur adhésion sans devoir utiliser une couche de liant. Ce produit peut être le liant décrit précédemment. Avantageusement, on ne met ce produit que dans la couche de polyoléfine.

Parmi les polymères thermoplastiques étanches, on préfère les polyamides, les copolyamides ou leurs mélanges avec des polyoléfines.

On entend par polyamide les produits de condensation :
- d'un ou plusieurs aminoacides, tels que les acides aminocaproïque, amino-7-heptanoïque, amino-11-undécanoique et amino-12-dodécanoïque, d'un ou plusieurs lactames tels que caprolactame, oenantholactame et lauryllactame ;
- d'un ou plusieurs sels ou mélanges de diamines telles que l'hexaméthylène-diamine, la dodécaméthylènediamine, la métaxylylènediamine, le bis-p aminocyclohexylméthane et la triméthylhexaméthylène diamine avec des diacides tels que les acides isophtalique, téréphtalique, adipique, azélaïque, subérique, sébacique et dodécanedicarboxylique ;
ou des mélanges de tous ces monomères ce qui conduit à des copolyamides.

On peut utiliser des mélanges de polyamide. On utilise avantageusement le PA-6, le PA-11 et le PA-12 et les polyamides amorphes.

Le PA-11 et le PA-12 sont préférés à cause de leur température de fusion plus basse que celle du PA-6 et donc ils sont plus faciles à coextruder avec un liant et une polyoléfine.

Quant aux mélanges de polyamides et de polyoléfines, il est avantageux que ces mélanges soient à base d'une matrice de polyamide. Quant aux polyoléfines dispersées dans cette matrice de polyamide, ce sont des polymères comprenant des motifs oléfines tels que par exemple des motifs éthylène, propylène, butène-1, etc...

A titre d'exemple, on peut citer :
- le polyéthylène, le polypropylène, les copolymères de l'éthylène avec des alphaoléfines. Ces produits peuvent être greffés par des anhydrides d'acides carboxyliques insaturés tels que l'anhydride maléique ou des époxydes insaturés tels que le méthacrylate de glycidyle ;
- les copolymères de l'éthylène avec au moins un produit choisi parmi (i) les acides carboxyliques insaturés, leurs sels, leurs esters, (ii) les esters vinyliques d'acides carboxyliques saturés, (iii) les acides dicarboxyliques insaturés, leurs sels, leurs esters, leurs hemiesters, leurs anhydrides, (iv) les époxydes insaturés, les motifs (i) à (iv) pouvant être greffés ou copolymérisés ;
- les copolymères blocs styrène / éthylène-butène / styrène (SEBS) éventuellement maléisés.

On peut utiliser des mélanges de deux ou plusieurs de ces polyoléfines.

On utilise avantageusement :
- le polyéthylène,
- les copolymères de l'éthylène et d'une alpha-oléfine,
- les copolymères de l'éthylène / de (méth)acrylate(s) d'alkyle(s),
- les copolymères de l'éthylène / de (méth)acrylate(s) d'alkyle(s) / de l'anhydride maléique, l'anhydride maléique étant greffé ou copolymérisé,
- les copolymères de l'éthylène / de (méth)acrylate(s) d'alkyle(s) / du méthacrylate de glycidyle, le méthacrylate de glycidyle étant greffé ou copolymérisé,
- le polypropylène.

Il est recommandé, pour faciliter la formation de la matrice de polyamide, et si les polyoléfines ont peu ou pas de fonctions pouvant faciliter la compatibilisation, d'ajouter un agent compatibilisant.

L'agent compatibilisant est un produit connu en soi pour compatibiliser les polyamides et les polyoléfines.

On peut citer par exemple :
- les copolymères éthylène / acide (méth)acrylique éventuellement neutralisés ;
- le polyéthylène, le polypropylène, les copolymères éthylène propylène, les copolymères de l'éthylène et d'une alphaoléfine, tous ces produits étant greffés par de l'anhydride maléique ou du méthacrylate de glycidyle.
- les copolymères éthylène / (méth)acrylate(s) d'alkyle(s) / anhydride maléique, l'anhydride maléique étant greffé ou copolymérisé,
- les copolymères éthylène / acétate de vinyle / anhydride maléique, l'anhydride maléique étant greffé ou copolymérisé.
- les deux copolymères précédents dans lesquels l'anhydride maléique est remplacé par le méthacrylate de glycidyle,
- le polyéthylène, le polypropylène ou les copolymères éthylène propylène, ces polymères étant greffés par un produit présentant un site réactif avec les amines ; ces copolymères greffés étant ensuite condensés avec des polyamides ou des oligomères polyamides ayant une seule extrémité amine.

Ces produits sont décrits dans les brevets FR 2 291 225 et EP 342 066 dont le contenu est incorporé dans la présente demande.

La quantité de polyamide formant la matrice peut être comprise entre 55 et 95 parties pour 5 à 45 parties de polyoléfines.

La quantité de compatibilisant est la quantité suffisante pour que la polyoléfine se disperse sous forme de nodules dans la matrice polyamide. Elle peut représenter jusqu'à 20 % du poids de la polyoléfine. On fabrique ces polymères de la couche intérieure par mélange de polyamide, de polyoléfine et éventuellement de compatibilisant selon les techniques usuelles.

Dans le cas du polypropylène, on ajoute un comptabilisant qui est avantageusement un copolymère éthylène / propylène majoritaire en nombre de motifs propylène, greffé par l'anhydride maléique, puis éventuellement condensé ensuite avec des oligomères mono aminés de caprolactame.

De tels mélanges de polyamide et de polypropylène sont décrits dans le brevet US 5 342 886.

Ces polyamides ou leurs mélanges avec des polyoléfines peuvent contenir aussi des charges telles que du noir de carbone, des anti oxydants, etc.

On ne sortirait pas du cadre de l'invention en utilisant comme polymère thermoplastique étanche des mélanges de polyamide et de polyoléfines à matrice polyoléfine. Les polyamides et les polyoléfines sont choisies parmi les produits précédénts.

La perméabilité aux hydrocarbures est supérieure à celle des polyamides ou des matrices polyamides mais elle peut être suffisante. Un avantage de cette forme de l'invention est que l'adhérence entre cette couche et la couche principale est suffisante et peut se faire sans liant. Cet avantage est utilisé en particulier pour une couche principale en polyéthylène et une couche étanche à matrice polyéthylène.

## Revendications

1. Utilisation dans des réseaux enterrés de tubes, pour le transport d'eau potable, comprenant une couche principale en polyoléfine recouverte à l'extérieur d'une couche d'un polymère thermoplastique étanche aux hydrocarbures.

2. Utilisation selon la revendication 1, dans laquelle le polymère thermoplastique étanche aux hydrocarbures est choisi parmi le polyfluorure de vinylidène, les copolymères de l'éthylène et de l'alcool vinylique, les polyesters, les polyamides, les mélanges de polyamides avec des polyoléfines.

3. Utilisation selon la revendication 1 ou 2, dans laquelle un liant est disposé entre la couche principale en polyoléfine et la couche du polymère thermoplastique étanche aux hydrocarbures.

4. Utilisation selon l'une des revendications 1 à 3, dans laquelle la couche principale est en polyéthylène et la couche étanche aux hydrocarbures est en polyamide.

## Patentansprüche

1. Verwendung von Rohren, die eine Hauptschicht aus Polyolefinen aufweisen, die außen mit einer Schicht aus einem für Kohlenwasserstoffe undurchlässigen thermoplastischen Polymeren überzogen ist, in einem erdverlegten Leitungsnetz für den Transport von Trinkwasser.

2. Verwendung nach Anspruch 1, in der das für Kohlenwasserstoffe undurchlässige thermoplastische Polymere unter Polyvinylidenfluorid, den Copolymeren von Ethylen und Vinylalkohol, den Polyestern, den Polyamiden und Gemischen von Polyamiden mit Polyolefinen ausgewählt ist.

3. Verwendung nach Anspruch 1 oder 2, in der ein Bindemittel zwischen der Hauptschicht aus Polyolefinen und der Schicht aus einem für Kohlenwasserstoffe undurchlässigen thermoplastischen Polymeren angeordnet ist.

4. Verwendung nach einem der Ansprüche 1 bis 3, in der die Hauptschicht aus Polyethylen und die für Kohlenwasserstoffe undurchlässige Schicht aus Polyamiden besteht.

## Claims

1. Use, in buried mains, of pipes, for conveying drinking water, including a main layer made of polyolefin covered externally with a layer of a thermoplastic polymer which is impervious to hydrocarbons.

2. Use according to Claim 1, in which the thermoplastic polymer which is impervious to hydrocarbons is chosen from polyvinylidene fluoride, copolymers of ethylene and of vinyl alcohol, polyesters, polyamides and mixtures of polyamides with polyolefins.

3. Use according to Claim 1 or 2, in which a binder is placed between the main layer of polyolefin and the layer of the thermoplastic polymer which is impervious to hydrocarbons.

4. Use according to one of Claims 1 to 3, in which the main layer is made of polyethylene and the layer which is impervious to hydrocarbons is made of polyamide.
